(19) Europäisches Patentamt
European Patent Office
Office européen des brevets

(11) EP 1 092 731 B1

(12) **FASCICULE DE BREVET EUROPEEN**

(45) Date de publication et mention de la délivrance du brevet:
**14.12.2011 Bulletin 2011/50**

(51) Int Cl.:
***C08F 10/02*** *(2006.01)* ***C08F 4/54*** *(2006.01)*
***C07F 17/00*** *(2006.01)*

(21) Numéro de dépôt: **00121834.6**

(22) Date de dépôt: **06.10.2000**

(54) **Système catalytique, son procédé de préparation et procédé de préparation d'un copolymère d'éthylène et d'un diène conjugué**

Katalysatorsystem, Verfahren zu seiner Herstellung und Verfahren zur Herstellung eines Copolymers von Ethylen-konjugiertem Dien

Catalytic system, process for its preparation and that of an ethylene-conjugated diene copolymer

(84) Etats contractants désignés:
**AT BE CH CY DE DK ES FI FR GB GR IE IT LI LU MC NL PT SE**

(30) Priorité: **12.10.1999 FR 9912798**

(43) Date de publication de la demande:
**18.04.2001 Bulletin 2001/16**

(60) Demande divisionnaire:
**07010599.4 / 1 829 901**

(73) Titulaires:
- **Société de Technologie Michelin**
  **63000 Clermont-Ferrand Cedex 09 (FR)**
- **Michelin Recherche et Technique S.A.**
  **1763 Granges-Paccot (CH)**

(72) Inventeurs:
- **Barbotin, Fanny**
  **63000 Clermont-Ferrand (FR)**
- **Boisson, Christophe**
  **69100 Villeurbanne (FR)**
- **Spitz, Roger**
  **69006 Lyon (FR)**

(74) Mandataire: **Le Cam, Véronique Marie Christine et al**
**Michelin & Cie**
**Service SGD/LG/PI - LAD (F35)**
**63040 Clermont-Ferrand Cedex 09 (FR)**

(56) Documents cités:
**US-A- 4 801 666 US-A- 5 109 085**

- **CUI, LI QIANG ET AL: "Preliminary investigations on polymerization catalysts composed of lanthanocene and methyl aluminoxane" POLYM. BULL. (BERLIN) (1998), 40(6), 729-734, XP000755393**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 092 731 B1

## Description

La présente invention concerne un procédé de préparation d'un copolymère d'éthylène et d'un diène conjugué consistant à utiliser un nouveau système catalytique.

Il est connu de polymériser l'éthylène au moyen de certains complexes à base de lanthanides. Ces catalyseurs peuvent être utilisés sur une large gamme de pression et de température, avantageusement à pression réduite et à une température proche de l'ambiante pour la polymérisation de l'éthylène.

Les premiers complexes à base de lanthanides qui ont été décrits dans la littérature sont des complexes alkylés. En particulier, Ballard et al. ont décrit dans J. Chem. Soc., Chem. Comm. pp. 994-995 (1978) la polymérisation de l'éthylène au moyen d'un complexe répondant à la formule $[(C_5H_5)_2ErMe]_2$ (où Me est un groupe méthyl).

Ces complexes alkylés peuvent atteindre des activités instantanées qui sont très élevées, comme cela est décrit dans le document de brevet américain US-A-4 716 257, en référence à un complexe analogue répondant à la formule $[(C_5Me_5)_2\ Ln\ H]_2$ (où Ln représente un lanthanide).

Cependant, un inconvénient majeur de ces complexes alkylés est qu'ils se désactivent très rapidement.

Un autre inconvénient réside dans la relative complexité de leur synthèse.

Pour pallier ces inconvénients, on a cherché à développer des complexes non alkylés à base de lanthanides. Ces complexes possèdent une liaison métal-halogène, et ils sont alkylés dans le milieu de polymérisation. Le document de brevet américain US-A-5 109 085 décrit la polymérisation de l'éthylène avec des complexes de formule $C_{Pn}LnX_{4-n}$ M'Lx (où L est une molécule complexante et où x est un entier égal ou supérieur à 1), qui sont additionnés d'un ou plusieurs co-catalyseurs. Ce document évoque par ailleurs la possibilité de copolymériser l'éthylène et le butadiène avec ce même complexe.

Ce type de complexe non alkylé comporte ainsi dans son environnement une ou plusieurs molécules complexantes L, qui peuvent par exemple être constituées de tétrahydrofuranne ou d'éther diéthylique, et qui sont ajoutées pour des raisons de synthèse organométallique.

Or, il s'avère que ces molécules complexantes peuvent entrer en compétition avec le monomère éthylénique lors de la complexation sur le lanthanide, avec comme conséquence indésirable une limitation de l'activité catalytique et donc du rendement de la polymérisation.

Par ailleurs, l'article chinois de Cui, Li Qiang et al: « Preliminary investigations on polymerization catalysts composed of lanthanocene and methyl aluminoxane », Polymer Bulletin (Berlin), 1998, 40(6), pp. 729-734, présente un système catalytique prévu pour l'homopolymérisation de l'isoprène, du butadiène, ou du styrène. Ce système catalytique comprend:

- un complexe organométallique de terre rare répondant à l'une ou l'autre des formules suivantes:

$(C_5H_9Cp)_2NdCl$ (I),

$(C_5H_9Cp)_2SmCl$ (II),

$(MeCp)_2SmOAr'$ (III),

$(Ind)_2NdCl$ (IV),

$Me_2Si(Ind)_2NdCl$ (V),

$(Flu)_2NdCl$ (VI),

  où Cp, Ind et Flu sont respectivement des groupes cyclopentadiényle, indényle et fluorényle et OAr' est un groupe phénoxy; et
- un co-catalyseur constitué de méthylaluminoxane, testé en comparaison d'un co-catalyseur constitué d'un alkyl aluminium.

Pour la copolymérisation de l'éthylène et d'un diène conjugué, la demanderesse a découvert d'une manière surprenante que l'association à un co-catalyseur choisi parmi un groupe comprenant un alkyl magnésium, un alkyl lithium, un alkyl aluminium, un réactif de Grignard ou un mélange de ces constituants, d'un complexe organométallique représenté par la formule générique suivante B':

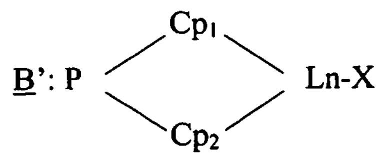

où Ln représente un métal d'un lanthanide dont le numéro atomique peut aller de 57 à 71,
où X représente un halogène pouvant être le chlore, le fluor, le brome ou l'iode,
où, dans la formule B', une molécule de ligand est reliée audit métal Ln constituée de deux groupes cyclopentadiényle ou fluorényle $Cp_1$ et $Cp_2$ qui sont substitués ou non et qui sont reliés entre eux par un pont P répondant à la formule $MR_2$, où M est un élément de la colonne IVA de la classification périodique de Mendeleev, par exemple le silicium, et où R est un groupe alkyle comprenant de 1 à 20 atomes de carbone,
permet de remédier à l'inconvénient précité qui est inhérent aux complexes non alkylés à base de lanthanides qui comprennent des molécules complexantes, et donc d'obtenir un rendement de polymérisation satisfaisant.

De préférence, ledit complexe organométallique est tel que le lanthanide Ln est le néodyme.
A titre préférentiel, $Cp_1$ et $Cp_2$ sont identiques, et chacun d'eux comprend un groupe cyclopentadiényle.
A titre encore plus préférentiel, $Cp_1$ et $Cp_2$ sont chacun constitués d'un groupe cyclopentadiényle qui est substitué par un radical alkyl ou alkyl silyl.
Dans le cas d'une substitution par un radical alkyl silyl, $Cp_1$ et $Cp_2$ répondent chacun par exemple à la formule $Cp_B=(C_5H_3)(SiMe_3)$ (Me représentant un groupe méthyle). Le complexe organométallique répond alors à la formule B ci-après :

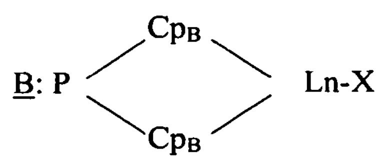

Dans la formule particulière B, est donc reliée audit métal Ln une molécule de ligand, constituée de deux groupes $Cp_B$ qui sont reliés entre eux par ledit pont P, $Cp_B$ étant constitué d'un groupe cyclopentadiényle qui est substitué par un radical alkyl silyl répondant à la formule $(C_5H_3)(SiMe_3)$.
Selon une variante de réalisation du procédé selon l'invention où $Cp_1$ et $Cp_2$ sont identiques, chacun deux comprend un groupe fluorényle non substitué qui répond à la formule $C_{13}H_8$, pour ladite formule générique B'. Dans ce dernier cas, à la formule B' correspond la formule particulière B précitée, dans laquelle $Cp_B = C_{13}H_8$.
Dans le cas où $Cp_1 = Cp_2 = Cp$, ledit complexe organométallique utilisé dans le procédé conforme à l'invention est préparé

- dans une première étape, en faisant réagir avec un alkyl lithium une molécule hydrogénée de ligand, représentée par la formule HCp, pour obtenir un sel de lithium,
- dans une seconde étape, en faisant réagir dans un solvant complexant ledit sel avec un trihalogénure anhydre d'un lanthanide qui est représenté par la formule $LnX_3$, où X représente un halogène pouvant être le chlore, le fluor, le brome, ou l'iode,
- dans une troisième étape, en évaporant ledit solvant complexant, puis en procédant dans un solvant non complexant à l'extraction du produit obtenu au terme de ladite seconde étape, et éventuellement,
- dans une quatrième étape, en procédant à la cristallisation du produit extrait au terme de ladite troisième étape, pour obtenir ledit complexe organométallique répondant à ladite formule B qui soit totalement exempt dudit solvant complexant.

Pour ladite première étape, on utilise de préférence à titre d'alkyl lithium le butyl lithium.
Pour ladite seconde étape, on utilise de préférence à titre de solvant complexant le tétrahydrofuranne. De plus, on fait réagir avantageusement deux moles dudit sel de lithium avec une ou deux moles dudit trihalogénure de lanthanide.
Pour ladite troisième étape, on utilise de préférence à titre de solvant non complexant le toluène ou l'heptane.

Quant audit co-catalyseur, dans le cas où il est constitué d'un mélange d'un alkyl aluminium et d'un alkyl lithium, ces deux constituants sont avantageusement présents en quantités stoechiométriques ou proches de la stoechiométrie dans ledit mélange, pour l'obtention d'une activité catalytique satisfaisante.

Pour ce co-catalyseur, on utilise avantageusement le butyloctyl magnésium à titre d'alkyl magnésium, le butyl lithium à titre d'alkyl lithium, l'hydrure de diisobutyl aluminium à titre d'alkyl aluminium, et le chlorure de butyl magnésium à titre de réactif de Grignard.

Un procédé de préparation selon l'invention de copolymères d'éthylène et d'un diène conjugué est tel qu'il consiste à faire réagir, dans un solvant hydrocarboné inerte et en présence de l'éthylène et du diène conjugué, ledit complexe organométallique avec ledit co-catalyseur.

On peut par exemple utiliser à titre de diène conjugué le 1, 3-butadiène, le 2-méthyl 1, 3-butadiène (respectivement appelés butadiène et isoprène dans la suite de la présente description), les 2, 3-di (alcoyle en Cl à C5) 1, 3-butadiène tels que par exemple le 2, 3 diméthyl-1, 3-butadiène, le 2, 3-diéthyl-1, 3 -butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

La réaction mise en oeuvre dans ce procédé peut être réalisée en suspension ou en solution, sous une pression variable, et à une température comprise entre -20° C et 220° C, de préférence comprise entre 20° C et 90° C.

Le rapport du nombre de moles dudit co-catalyseur sur le nombre de moles dudit complexe organométallique est choisi égal ou supérieur à 1 et, de préférence, il peut aller de 2 à 100.

La concentration en lanthanide du milieu réactionnel est avantageusement inférieure à 0,3 mmol/l.

Quant à la fraction molaire de butadiène dans ce milieu réactionnel, elle est avantageusement comprise entre 1 % et 80 %.

Le copolymère d'éthylène et d'un diène conjugué qui est obtenu par ce procédé peut présenter les caractéristiques de microstructure suivantes, en fonction du complexe organométallique utilisé pour le système catalytique.

- Si l'on utilise le butadiène à titre de premier exemple de diène conjugué, alors le copolymère obtenu pourra présenter les enchaînements de chaîne suivants pour les unités butadiène qui sont insérées dans ce copolymère:

  1, 4 cis; 1, 4 trans; 1, 2 ou sous la forme de trans 1, 2 cyclohexane.

Plus précisément, si l'on utilise en outre à titre de complexe organométallique un complexe répondant à la formule $\{[(C_5H_3)SiMe_3]_2SiMe_2\}NdCl$, alors le butadiène sera majoritairement inséré dans la chaîne du copolymère par des enchaînements 1, 4 trans.

Et si l'on utilise un complexe répondant à la formule $[(C_{13}H_8)_2SiMe_2]NdCl$, alors le butadiène sera majoritairement inséré dans la chaîne du copolymère par des enchaînements trans 1, 2 cyclohexane.

- Si l'on utilise l'isoprène à titre de second exemple de diène conjugué, alors le copolymère obtenu pourra présenter les enchaînements de chaîne suivants pour les unités isoprène qui sont insérées dans ce copolymère:

  1, 4; 1, 2 ou 3, 4.

Plus précisément, si l'on utilise un complexe répondant à la formule $[(C_{13}H_8)_2SiMe_2]NdCl$, alors l'isoprène sera majoritairement inséré dans la chaîne du copolymère par des enchaînements 3, 4.

Selon une autre caractéristique des copolymères d'éthylène et de butadiène obtenus par le procédé selon l'invention, ces copolymères présentent une statistique d'enchaînement "éthylène-butadiène" qui est essentiellement du type alternée lorsqu'on utilise un complexe organométallique répondant à la formule $\{[(C_5H_3)SiMe_3]_2SiMe_2\}NdCl$.

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison d'un dernier exemple illustrant un état antérieur de la technique.

Pour tous les exemples suivants, on a opéré sous argon et on a préalablement séché les solvants utilisés par distillation, ou bien sur un tamis moléculaire de 3 Å sous balayage d'argon.

On a déterminé, pour chacun des copolymères obtenus dans ces exemples, la microstructure de ces copolymères, d'une part, par les techniques de RMN$^1$H et, d'autre part, par la technique RMN$^{13}$C. On a utilisé à cet effet un spectromètre commercialisé sous la dénomination "BRUKER", à des fréquences de 400 MHz pour la technique de RMN$^1$H et de 100,6 MHz pour la technique de RMN$^{13}$C.

On a détaillé à l'annexe I la méthode utilisée pour la détermination de cette microstructure.

**EXEMPLE 1:**

**Système catalytique comprenant un complexe organométallique neutre ponté: le chloro (μ-diméthylsilyl) bis (η5-triméthylsilylcyclopentadiényl) néodyme, répondant à la formule {[($C_5H_3$)SiMe$_3$]$_2$SiMe$_2$}NdCl (formule générique « B » précitée).**

- Synthèse d'un composé de formule [($C_5H_4$)SiMe$_3$SiMe$_2$:

On introduit dans un tube de Schlenk 16 mmol d'un composé de formule Li[($C_5H_4$)SiMe$_3$], 8 mmol de $Me_2SiCl_2$ et 80 ml de THF. On agite l'ensemble pendant une nuit et à température ambiante. On évapore ensuite une partie du THF, et on ajoute de l'heptane. La solution obtenue est ensuite successivement hydrolysée, lavée au moyen d'une solution aqueuse saturée en $NH_4Cl$, et séchée sur du sulfate de magnésium. On évapore ensuite le THF, et le produit finalement obtenu est une huile visqueuse répondant à la formule précitée.

- Synthèse d'un sel de formule [($C_5H_3$)SiMe$_3$]SiMe$_2$Li$_2$:

Dans un tube de Schlenk qui contient une solution de solution de THF comprenant 7 mmol dudit composé de formule [($C_5H_4$)SiMe$_3$]$_2$SiMe$_2$, on ajoute progressivement et à 0° C 14 mmol de BuLi. On agite l'ensemble à température ambiante pendant 6 heures, puis on fait précipiter le produit obtenu par ajout d'heptane. On filtre ensuite le précipité, on le lave à l'heptane puis on le sèche sous vide. On obtient ainsi le sel précité.

- Synthèse du complexe organométallique de formule {[ ($C_5H_3$)SiMe$_3$]$_2$SiMe$_2$}NdCl:

On agite à reflux et pendant une nuit 4 mmol de $NdCl_3$ anhydre dans du THF. On ajoute ensuite 4 mmol dudit sel de formule [($C_5H_3$)SiMe$_3$]$_2$SiMe$_2$Li$_2$ à cette suspension. Puis on agite l'ensemble, dans une premier temps, pendant 4 heures à température ambiante puis, dans un second temps, pendant 24 heures à reflux dans le THF. On évapore le THF et on ajoute du toluène. On filtre le sel, puis on cristallise à une température de -10° C le produit finalement obtenu après l'avoir concentré. On obtient ainsi ledit complexe organométallique.

- L'analyse élémentaire centésimale de ce complexe donne les pourcentages suivants pour les atomes de carbone et d'hydrogène:

  % C = 42,8 et % H = 5,75.

On a procédé à la caractérisation de ce complexe organométallique par la technique de RMN $^1$H à 300 MHz. On observe par cette technique deux massifs dont chaque intégrale correspond à 3 protons:

un premier massif à 2,13 ppm et un second massif à - 8,97 ppm sont chacun représentatifs des protons de Si($CH_3$)$_2$ de ce complexe.

On observe enfin un massif à -2,99 ppm, dont l'intégrale correspond à 18 protons et qui est représentatif des protons des deux substituants Si($CH_3$)$_3$ dudit complexe.

On notera que les pics correspondant aux protons de $C_5H_3$ ne sont pas détectés, probablement du fait que ces pics sont très larges.

- Procédé de copolymérisation:

On réalise quatre essais correspondant chacun à l'introduction en une seule fois, dans un réacteur contenant environ 300 ml de toluène, dudit complexe organométallique de formule {[($C_5H_3$)SiMe$_3$]$_2$SiMe$_2$}NdCl en quantité x (mg) déterminée, d'un mélange d'éthylène et de butadiène avec une fraction molaire déterminée y (%) de butadiène, et d'un co-catalyseur. La température interne du réacteur est portée à 80° C.

Lorsque la fraction y de butadiène le permet, on maintient la pression interne du réacteur à une valeur constante, qui est égale à 4 bars.

Après un temps t, on stoppe la polymérisation par refroidissement et dégazage du réacteur, puis on fait précipiter le polymère obtenu dans du méthanol. Après séchage, on obtient une masse m de polymère.

Pour chacun de ces trois essais, le co-catalyseur utilisé est constitué d'un mélange de BuLi et d'HDiBA selon les proportions molaires suivantes:

BuLi / HDiBA /néodyme = 10/10/1.

Le tableau I ci-dessous précise les conditions opératoires et les résultats obtenus pour les trois essais précités.

Tableau I

| essais | x (mg) | y (%) dans mélange monomères | % butadiène dans le copolymère | stéréochimie de l'insertion du butadiène dans le copolymère | | | co-catalyseur | t (min) | m (g) |
|---|---|---|---|---|---|---|---|---|---|
| | | | | % 1, 2 | %1,4 trans | % trans 1, 2 cyclohexane | | | |
| n°1 | 31 | 5,4 | 6,9 | 2 | 98 | 0 | BuLi+HDiBA | 30 | 13,5 |
| n°2 | 30 | 43 | 41 | 2,5 | 97,5 | 0 | BuLi+HDiBA | 120 | 4,8 |
| n°3 | 36 | 80 | 61,5 | 4,5 | 95,5 | 0 | BuLi+HDiBA | 900 | 0,5 |

On a cherché à déterminer la statistique d'enchaînements "éthylène-butadiène" pour le copolymère obtenu à l'essai n°2.

En mettant en oeuvre la méthode de l'annexe II, on a obtenu pour ce copolymère:

- un indice de bloc η égal à 1,69 et
- un indice de bloc $\eta_{alterné}$ (correspondant à un copolymère parfaitement alterné de même composition) égal à 1,78.

On en déduit que ce copolymère présente une tendance à l'alternance pour ces enchaînements.

**EXEMPLE 2:**

**Système catalytique comprenant un complexe organométallique neutre ponté: le chloro (μ-diméthylsilyl) bis (η5-fluorényl) néodyme, répondant à la formule $[(C_{13}H_8)_2SiMe_2]NdCl$ (formule générique « B » précitée).**

- Synthèse d'un composé de formule $Me_2Si(C_{13}H_9)_2$:

On agite à reflux dans du THF et pendant une nuit 18 mmol de $C_{13}H_{10}$ et 18 mmol d'hydrure de sodium. On ajoute ensuite à ce mélange 8,1 mmol de $Cl_2SiMe_2$, puis on agite la solution obtenue pendant 3 heures et à température ambiante. On évapore ensuite une partie du THF, puis on ajoute de l'heptane. On hydrolyse la phase organique obtenue et on l'extrait à plusieurs reprises par une solution aqueuse saturée en $NH_4Cl$, Puis on évapore le solvant et, après séchage sous vide à 60° C de l'extrait, on récupère finalement ledit composé répondant à la formule précitée.

- Synthèse d'un sel de formule $Me_2Si(C_{13}H_8)_2Li_2$:

On agite à température ambiante, pendant une nuit dans du toluène puis pendant 3 heures à 50° C, 4,4 mmol dudit composé de formule $Me_2Si(C_{13}H_9)_2$ et 13 mmol de BuLi. On obtient un précipité constitué d'un sel répondant à la formule précitée, que l'on lave à l'heptane puis que l'on sèche sous vide.

- Synthèse du complexe organométallique de formule $[(C_{13}H_8)_2SiMe_2NdCl$:

On agite à reflux du THF et pendant une nuit 2 mmol de $NdCl_3$. On y ajoute ensuite 2,1 mol dudit sel à 0° C, puis on chauffe l'ensemble à reflux pendant 22 heures. On évapore ensuite le THF, et on récupère ledit complexe organométallique par extraction au toluène suivie d'une évaporation de ce dernier.

- Procédé de copolymérisation de l'éthylène et du butadiène:

On réalise cinq essais en procédant comme dans l'exemple 1, à la différence que l'on utilise à titre de complexe organométallique ce composé de formule $[(C_{13}H_8)_2SiMe_2]NdCl$.

Pour les deux premiers essais, le co-catalyseur utilisé est constitué d'un mélange de BuLi et d'HDiBA selon les proportions molaires suivantes:

BuLi / HDiBA /néodyme = 10/10/1.

Pour chacun des troisième et quatrième essais, le co-catalyseur utilisé est constitué de chlorure de butyl magnésium selon la proportion molaire de 20/1 par rapport au néodyme.

Pour le cinquième essai, le co-catalyseur utilisé est constitué de BuLi selon la proportion molaire de 2/1 par rapport au néodyme.

Le tableau II ci-dessous précise les conditions opératoires et les résultats obtenus pour les cinq essais précités.

Tableau II

| essais | x (mg) | y (%) dans mélange monomères | % butadiène dans le copolymère | stéréochimie de l'insertion du butadiène dans le copolymère | | | co-catalyseur | t (min) | m (g) |
|---|---|---|---|---|---|---|---|---|---|
| | | | | % 1,2 | % 1,4 trans | % trans 1, 2 cyclohexane | | | |
| n°1 | 21,3 | 5 | 4 | 18 | 23 | 58 | BuLi+HDiBA | 70 | 9,9 |
| n°2 | 25,8 | 20 | 10,2 | 23,5 | 28,5 | 48 | BuLi+HDiBA | 135 | 3 |
| n°3 | 18,9 | 5 | 3,9 | 20 | 18 | 62 | butyl MgCl | 65 | 12,1 |
| n°4 | 17,3 | 19 | 21 | 28 | 22 | 50 | butyl MgCl | 60 | 2,8 |
| n°5 | 19,2 | 4,5 | 5,4 | 23 | 23 | 54 | BuLi | 60 | 3,7 |

- Procédé de copolymérisation de l'éthylène et de l'isoprène:

On synthétise ledit complexe organométallique de formule $[(C_{13}H_8)_2SiMe_2]NdCl$ de la même manière qu'au paragraphe 1) de cet exemple 4.

On réalise un essai en suivant le même procédé que celui décrit au paragraphe 2) de l'exemple 1.

Le tableau III suivant précise les conditions opératoires et les résultats obtenus pour cet essai.

Tableau III

| x (mg) | y (ml) | % isoprène dans le copolymère | stéréochimie de l'insertion de l'isoprène dans le copolymère | | | co-catalyseur | t (min) | m (g) |
|---|---|---|---|---|---|---|---|---|
| | | | %1,2 | %1,4 | % 3, 4 | | | |
| 31,1 | 1 | 2,12 | 1,6 | 21,5 | 76,9 | BuLi+HDiBA | 6 | 4,30 |

**ANNEXE I**

**Méthode de détermination de la microstructure des insertions des diènes conjugués dans les copolymères d'éthylène et d'un diène conjugué:**

NOTATIONS:

Dans l'ensemble des schémas et des tableaux de cette annexe, on a utilisé les symboles suivants:

T: unité butadiène ou isoprène insérée en 1, 4 trans,
C: unité butadiène ou isoprène insérée en 1, 4 cis,
L: unité butadiène insérée en 1, 4 cis ou trans,
V: unité butadiène insérée en 1, 2,
Cy: unité butadiène insérée dans un cycle,
E: unité éthylène, et
B: unité butadiène.

1) Concernant les copolymères d'éthylène et de butadiène:

a) A partir du spectre RMN $^{13}C$:

Pour déterminer les proportions des divers taux de butadiène d'un copolymère, il est nécessaire de réaliser un spectre RMN$^{13}C$.

Dans certains cas, ce spectre comporte des raies caractéristiques de la formation de cycles, qui sont répertoriées dans le tableau 4 ci-après. Il n'est alors pas possible de calculer simplement le taux de butadiène à partir du spectre RMN$^{1}H$. En effet, les résonances qui résultent de ces cycles en RMN$^{1}H$ se trouvent dans la zone des $CH_2$ de l'éthylène, et elles ne peuvent pas être évaluées séparément.

Dans ce cas précis, le calcul des taux de butadiène s'effectue à partir de la détermination des intégrales des raies du spectre RMN$^{13}C$.

Pour les copolymères d'éthylène et de butadiène, le butadiène peut s'insérer dans la chaîne de copolymère suivant quatre types d'insertion:

- 1, 4 trans (voir schéma 1 ci-après),
- 1, 4 cis (voir schéma 2 ci-après),
- 1, 2 (voir schéma 3 ci-après), et
- sous forme de cycles trans 1.2 cyclohexane (voir schéma 4 ci-après).

Schéma 1 : notations employées pour désigner les différents carbones d'une unité butadiène insérée en 1,4 trans et sous forme isolée dans la chaîne de copolymère

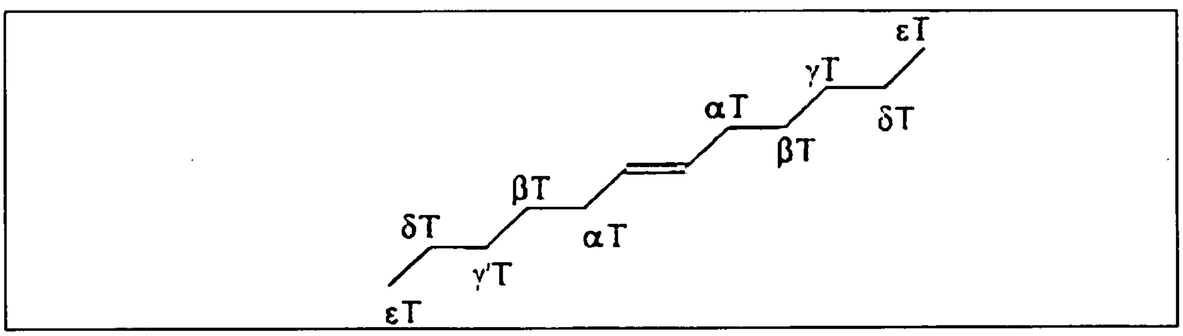

Schéma 2 : notations employées pour désigner les différents carbones d'une unité butadiène insérée en 1,4 cis et sous forme isolée dans la chaîne de copolymère

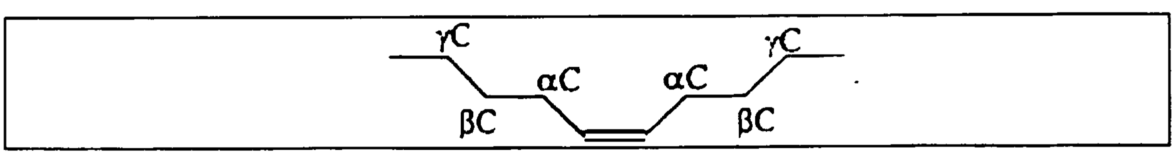

Schéma 3 : notations employées pour désigner les différents carbones d'une unité butadiène insérée en 1,2 et sous forme isolée dans la chaîne de copolymère

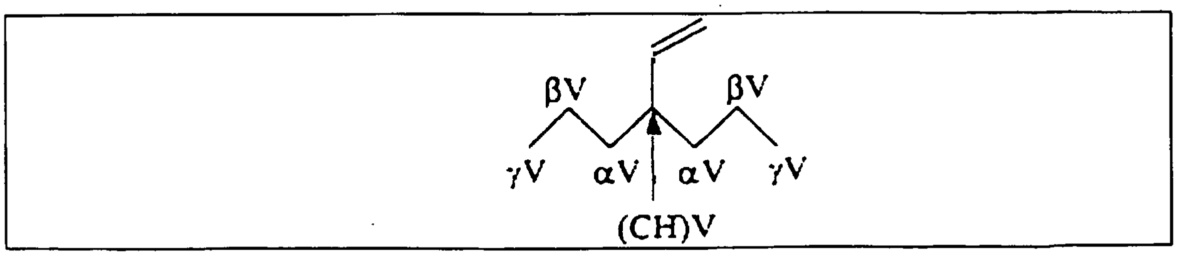

Schéma 4 : notations employées pour désigner les différents carbones d'une unité butadiène insérée sous forme de trans 1,2 cyclohexane isolés dans la chaîne de copolymère

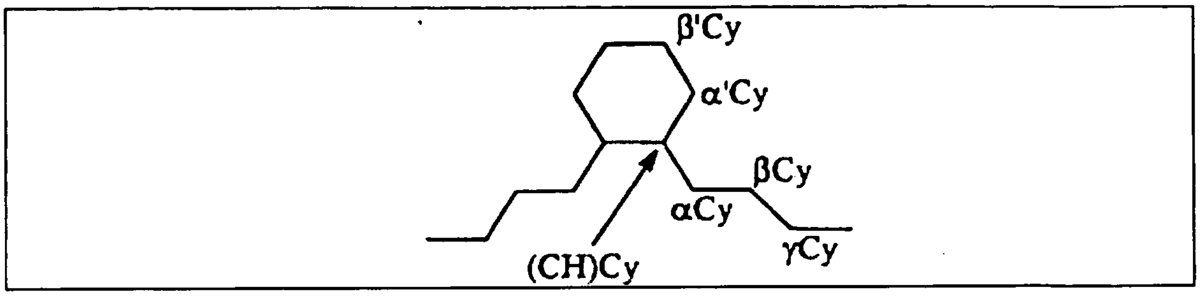

La plupart de ces atomes de carbone résonnent à une fréquence qui leur est propre, laquelle ne correspond pas à la fréquence de résonance des atomes de carbone d'une chaîne de polyéthylène. Les tableaux suivants 1 à 4 résument les valeurs des déplacements chimiques δ pour ces atomes de carbone, et pour chacun des quatre types d'insertion précités.

Tableau 1 : insertion du butadiène en 1,4 cis, déplacement chimique caractéristique

| Intégrale | Type de carbone | δ (ppm) |
|---|---|---|
| 13 | αC | 27,88 |

Tableau 2 : raies caractéristiques de l'insertion du butadiène en 1,2

| Intégrale | Type de carbone | δ (ppm) |
|---|---|---|
| | (CH) V | 44,27 |
| 9 | αV | 35,48 |
| 10 | βV | 27,51 |
| | γV | 30,22 |

Tableau 3 : raies caractéristiques de l'insertion du butadiène sous forme de trans(1,2)cyclohexane

| Intégrale | Type de carbone | δ (ppm) |
|---|---|---|
| | (CH)Cy | 42,02 |
| | αCy | 33,99 |
| | α'Cy | 32,26 |
| | γCy | 30,59 |
| 11 | βCy | 27,02 |
| 12 | β'Cy | 26,67 |

Tableau 4 : valeurs des déplacements chimiques des carbones d'unités butadiène insérées en (1,4) trans

| Intégrale | Type de carbone | δ (ppm) |
|---|---|---|
| 1 | γδ TEET | 29,42 ppm |
| 2 | γ TEEE<br>βγ TET | 29,56 ppm |
| 3 | δε TEEET | 29,87 ppm |
| 4 | δ TEEEE | 29,91 ppm |
| 4' | ε TEEEE<br>βε TEET | 30,02 ppm |
| 5 | EE et β TEEE | 30,06 ppm |
| 6 | αδ TET | 32,76 ppm |
| 7 | α TEE | 32,90 ppm |
| 8 | αβ TT | 33,06 ppm |

Pour ces copolymères d'éthylène et de butadiène obtenus selon la présente invention, divers types d'enchaînements ont été mis en évidence grâce aux spectres RMN$^{13}$C. Ces enchaînements sont illustrés sur les schémas 5 à 8 ci-après. On a utilisé deux lettres de l'alphabet grec pour nommer en regard les différents carbones de ces enchaînements.

Schéma 5 : notations employées pour décrire les carbones d'un enchaînement TET

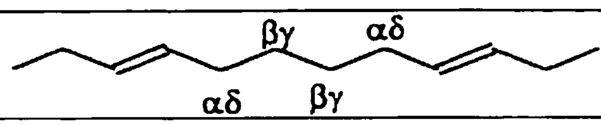

Schéma 6 : notations employées pour décrire les carbones d'un enchaînement TT

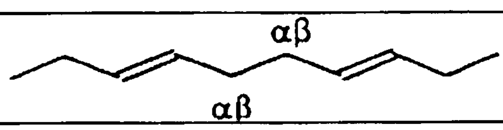

Schéma 7 : notations employées pour décrire les carbones d'un enchaînement TEET

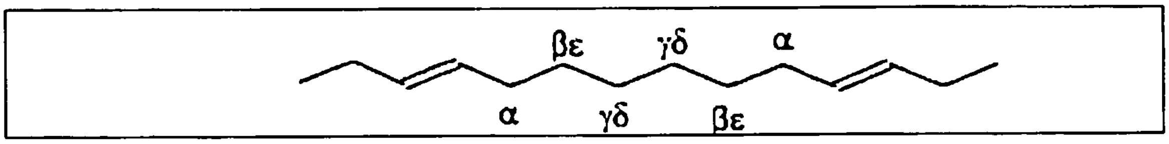

Schéma 8 : notations employées pour décrire les carbones d'un enchaînement TEEET

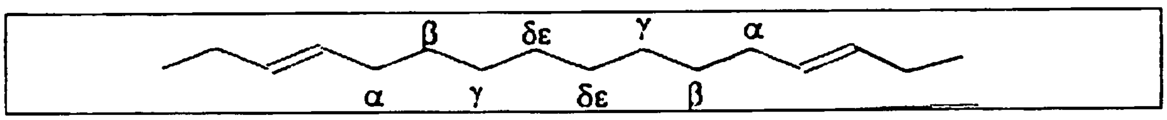

Comme pour les unités de butadiène insérées de façon isolée dans la chaîne de copolymère, certains des carbones de ces enchaînements résonnent à une fréquence qui leur est propre. Les valeurs correspondantes des déplacements chimiques sont également répertoriées dans le tableau 4 ci-dessus (les lettres majuscules dans la colonne relative à chaque type de carbone précisent le type d'enchaînement dont il est question).

La composition du copolymère a été déterminée à partir des valeurs des intégrales de certaines des raies qui sont listées dans les tableaux 1 à 4 ci-dessus. On peut écrire que:

$$T = (6+7+8)/2$$

$$V = (9+10)/4$$

$$Cy = (11+12)/4$$

$$C = 13/2$$

$$2E = (\text{intégrale de } 26{,}8 \text{ ppm à } 31{,}5 \text{ ppm}) + (12+9)/2.$$

Ces valeurs sont ensuite transformées en pourcentages.

b) <u>A partir du spectre RMN $^{1}H$</u>:

Lorsque sur le spectre RMN $^{13}C$ les raies caractéristiques de cycles sont absentes, le taux de butadiène inséré dans le copolymère peut être calculé plus précisément et plus simplement à partir du spectre RMN $^{1}H$.

Cependant ce calcul ne permet pas de déterminer si le butadiène s'est inséré en cis ou en trans. Il donne uniquement accès au pourcentage de butadiène total inséré en 1,4 . Si, d'après le spectre RMN $^{13}C$, les deux types d'insertions se produisent, il faut procéder au calcul du paragraphe précédent pour déterminer dans quelles proportions ces insertions ont lieu.

Dans le cas contraire, le calcul s'effectue à partir des intégrales de certaines raies du spectre qui sont listées dans le tableau 5. Le schéma 8 précise la signification du terme terminaison vinylique.

Schéma 9 : notations employées pour désigner les différents protons

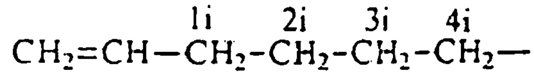

terminaison vinylique

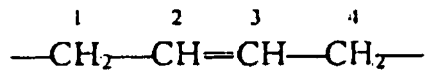

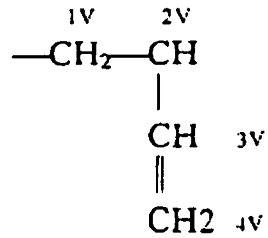

Tableau 5 : raies caractéristiques en RMN 1H de copolymères éthylène/butadiène ainsi que de terminaisons de chaînes

| Intégrale | δ (ppm) | Type de proton | Nombre de protons |
|---|---|---|---|
| $I_1$ | 0,87; 0,89 | $CH_3$ en fin de chaine | |
| | 1,30 | IV | 2 |
| | | $CH_2$ de l'éthylène | 4 |
| | 2 | 1+4 | 4 |
| | | 2V | 1 |
| | | $CH_2$ en α d'une terminaison vinylique | 2 |
| $I_2$ | 4,9 | $CH_2$= d'une terminaison vinylique | 2 |
| | | 4V | 2 |
| $I_2$ | 5.40 | 2+3 | 2 |
| $I_4$ | ≅ 5,55 | 3V | 1 |
| $I_5$ | ≅ 5,75 | CH d'une terminaison vinylique | 1 |

On peut alors écrire que :

$$T \text{ ou } C = I_3 \div 2$$
$$V = I_4$$
$$E = [I_1 - 2 \times I_3 - 3 \times I_4 + 4 \times I_5] \div 4$$

Ces valeurs sont aisément transformées en pourcentage.

2) Concernant les copolymères d'éthylène et d'isoprène:

Pour déterminer les proportions des insertions d'isoprène dans ces copolymères, on réalise à la fois des spectres RMN$^{13}$C et RMN$^{1}$H desdits copolymères.

L'isoprène peut s'insérer dans la chaîne de copolymère suivant quatre types d'insertion, illustrés sur le schéma 10 suivant.

Schéma 10 : différents types d'insertion de l'isoprène

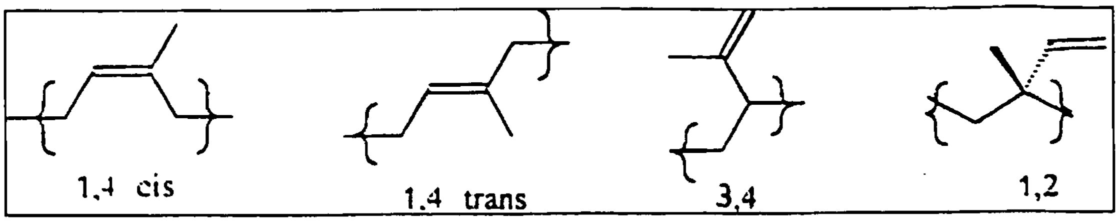

1,4 cis 1,4 trans 3,4 1,2

L'observation du spectre RMN $^{13}$C montre que, dans ce cas, à l'inverse des copolymères d'éthylène et du butadiène, il ne se forme pas de cycles.

Les taux d'insertion en 1,2 , 3,4 et 1,4 sont déterminés à partir du spectre RMN $^{1}$H. Des raies caractéristiques de ces insertions sont présentes sur le spectre $^{1}$H. Elles sont résumées dans le tableau 6. Les notations qui sont employées sont décrites sur le schéma 11.

Schéma 11 : notations employées pour désigner les différents protons

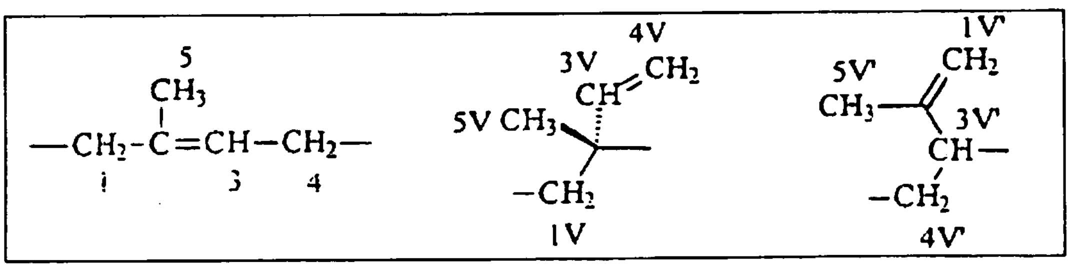

Tableau 6 : raies caractéristiques en RMN $^{1}$H de copolymères d'éthylène et d'isoprène

| Intégrale | δ en ppm | Type de proton | nombre de protons |
|---|---|---|---|
| S5 | 5,6 à 5,8 | 3V | 1 |
| S3 | 5,05 à 5,25 | 3 | 1 |
| S2 | 4,82 à 5,05 | 4V | 2 |
| $S_1$ | 4,42 à 4,82 | 1V' | 2 |
| | 1,99 | 1+4<br>3V' | 4<br>1 |
| | 1,59 | 5V' et<br>5 1.4 trans | 3<br>3 |

$$1{,}4 = S_3$$

$$3,4 = S_1/2$$

$$1,2 = S_2/2$$

$$E = [\text{intégrale de } 0,5 \text{ ppm à } 2,5 \text{ ppm}] - [7*S_3 + 3*S_1 + 5*S_5]$$

Ces valeurs sont aisément transformées en pourcentages

Le spectre RMN $^{13}C$ permet de préciser si l'insertion de l'isoprène est en 1,4 cis ou en 1,4 trans car des raies caractéristiques de ces insertions sont présentes sur ce spectre (tableau 7).

Notation : insertion en 1,4 cis (C) ou 1,4 (T)

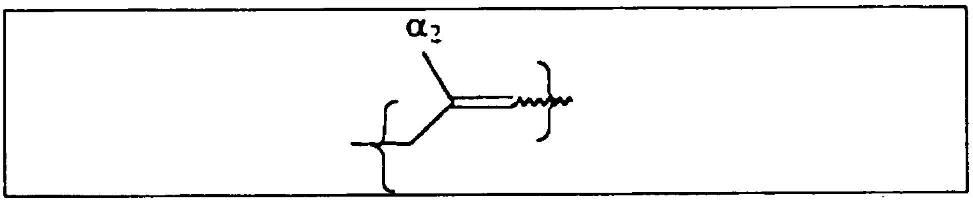

Tableau 7 : raies caractéristiques de l'insertion de l'isoprène en 1,4

| Intégrale | Type de carbone | δ (ppm) |
|---|---|---|
| 1 | $\alpha_2$ (cis) | 23,48 |
| 2 | $\alpha_2$ (trans) | 16,05 |
| % 1,4 en cis = 1/(1+2)<br>% 1,4 en trans = 2/(1+2) | | |

**ANNEXE II**

**Méthode de détermination de la statistique des enchaînements "éthylène-butadiène" dans les copolymères d'éthylène et de butadiène obtenus:**

NOTATIONS

tt désigne la fraction de diades TT d'un copolymère,
ee désigne la fraction de diades EE d'un copolymère,
be désigne la fraction de diades BE ou EB d'un copolymère,
e désigne la fraction d'éthylène d'un copolymère, et
b désigne la fraction de butadiène d'un copolymère.

D'après ces définitions, on peut écrire que

$$ee = EE / (EE + BE + TT)$$

$$be = BE / (EE + TE + TT)$$

$$e = E / (E + B)$$

$$b = B / (E + B),$$

avec

TT: nombre de diades TT d'un copolymère calculé à partir du spectre $RMN^{13}C$,
EE: nombre de diades EE d'un copolymère calculé à partir du spectre $RMN^{13}C$,
BE: nombre de diades BE ou EB d'un copolymère calculé à partir du spectre $RMN^{13}C$,
E: nombre d'unités éthylène d'un copolymère calculé à partir du spectre $RMN^{13}C$, et
T: nombre d'unités butadiène 1, 4 trans d'un copolymère calculé à partir du spectre $RMN^{13}C$.

Détermination de l'indice de bloc η pour estimer la structure statistique des copolymères:

Pour certains copolymères, une raie caractéristique de la présence de diades TT apparaît sur le spectre $RMN^{13}C$. Sa valeur est donnée dans le tableau 4 de l'annexe I.
Pour les copolymères où η n'a pas été calculé, les unités butadiène sont isolées dans la chaîne.
L'indice de bloc est défini par la relation:

$$\eta = (be) / (be)_{statistique}$$

où (be) représente la fraction de diades BE ou EB du copolymère analysé, et
$(be)_{statistique}$ représente la fraction de diades BE ou EB d'un copolymère statistique de même composition.

Pour un copolymère statistique homogène, on a $(be)_{statistique} = 2.\ e.\ b$,
et l'indice de bloc η peut alors s'écrire:

$$\eta = (be) / (2.\ e.\ b)$$

Pour un copolymère donné, l'indice de bloc η n'apportera des informations sur la structure de ce copolymère que s'il est comparé à un indice de bloc $\eta_{alterné}$ du copolymère parfaitement alterné de même composition. Par définition, lorsque b < e (ce qui est le cas pour tous les copolymères de l'invention), on a:

$$\eta_{alterné} = 1/e$$

Pour déteminer η et $\eta_{alterné}$, il est donc nécessaire de connaître b, e, ee, tt et be, soit encore B, E, EE, BB et

BE. Les valeurs de ces derniers paramètres peuvent être calculées à partir de certaines des intégrales des raies du spectre RMN$^{13}$C (voir annexe I), lesquelles intégrales apparaissent dans les équations suivantes:

On a:

$$BE = (1 + 2 + 6 + 7) / 2 + 13 + 9 + 11$$

$$2\ BB = 8$$

$$2\ B = 6 + 7 + 8 + (9 + 10) / 2 + (11 + 12) / 2 + 13$$

$$2\ E = [\text{intégrale de } 26{,}8 \text{ ppm à } 31{,}5 \text{ ppm}] + (12 + 9) / 2 - 13$$

$$EE = E - (BE) / 2\ .$$

- Conclusion sur la statistique des enchaînements éthylène/ butadiène:

Plus $\eta$ sera faible et plus le copolymère aura une tendance bloc.

Plus $\eta$ sera proche de $\eta_{alterné}$ et plus le copolymère aura une tendance à l'alternance.

**Revendications**

1. Procédé de préparation d'un copolymère d'éthylène et d'un diène conjugué, consistant à faire réagir un système catalytique dans un solvant hydrocarboné inerte en présence de l'éthylène et du diène conjugué, **caractérisé en ce qu'**il consiste à utiliser un système catalytique comprenant :

   - d'une part, un complexe organométallique représenté par la formule générique suivante :

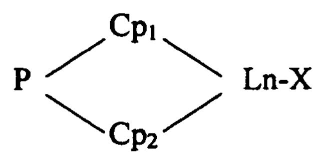

   où Ln représente un métal d'un lanthanide dont le numéro atomique peut aller de 57 à 71,
   où X représente un halogène pouvant être le chlore, le fluor, le brome ou l'iode,
   où est reliée audit métal Ln une molécule de ligand, constituée de deux groupes cyclopentadiényle ou fluorényle $Cp_1$ et $Cp_2$ qui sont substitués ou non et qui sont reliés entre eux par un pont P répondant à la formule $MR_2$, où M est un élément de la colonne IVA de la classification périodique de Mendeleev, et où R est un groupe alkyle comprenant de 1 à 20 atomes de carbone,
   et
   - d'autre part, un co-catalyseur qui est choisi parmi un groupe comprenant un alkyl magnésium, un alkyl lithium, un alkyl aluminium ou qui est constitué d'un mélange de ces constituants.

2. Procédé de préparation d'un copolymère d'éthylène et d'un diène conjugué selon la revendication 1, **caractérisé en ce qu'**il consiste à utiliser le silicium à titre de métal M compris dans ledit pont P de formule $MR_2$.

3. Procédé de préparation d'un copolymère d'éthylène et d'un diène conjugué selon une des revendications 1 à 2, **caractérisé en ce qu'**il consiste à utiliser le néodyme à titre de lanthanide Ln dans ledit complexe organométallique.

4. Procédé de préparation d'un copolymère d'éthylène et d'un diène conjugué selon une des revendications 1 à 3, **caractérisé en ce qu'**il consiste à utiliser à titre de complexe organométallique un complexe dans lequel $Cp_1$ et $Cp_2$ sont identiques, chacun d'eux comprenant un groupe cyclopentadiényle.

5. Procédé de préparation d'un copolymère d'éthylène et d'un diène conjugué selon la revendication 4, **caractérisé en ce qu'**il consiste à utiliser à titre de complexe organométallique un complexe dans lequel $Cp_1$ et $Cp_2$ sont chacun constitués d'un groupe cyclopentadiényle qui est substitué par un radical alkyl ou alkyl silyl.

6. Procédé de préparation d'un copolymère d'éthylène et d'un diène conjugué selon la revendication 5, **caractérisé en ce qu'**il consiste à utiliser à titre de complexe organométallique un complexe dans lequel ledit groupe cyclopentadiényle est substitué par un radical alkyl silyl, $Cp_1$ et $Cp_2$ répondant chacun à la formule $(C_5H_3)(SiMe_3)$, où Me représente un groupe méthyle.

7. Procédé de préparation d'un copolymère d'éthylène et d'un diène conjugué selon une des revendications 1 à 3, **caractérisé en ce qu'**il consiste à utiliser à titre de complexe organométallique un complexe dans lequel $Cp_1$ et $Cp_2$ sont identiques, chacun d'eux comprenant un groupe fluorényle.

8. Procédé de préparation d'un copolymère d'éthylène et d'un diène conjugué selon les revendications 2 et 7, **caractérisé en ce qu'**il consiste à utiliser à titre de complexe organométallique un complexe dans lequel $Cp_1$ et $Cp_2$ sont chacun constitués d'un groupe fluorényle non substitué qui répond à la formule $C_{13}H_8$.

9. Procédé de préparation d'un copolymère d'éthylène et d'un diène conjugué selon une des revendications 1 à 8, **caractérisé en ce qu'**il consiste à utiliser à titre d'alkyl magnésium, d'alkyl lithium et d'alkyl aluminium dans le groupe parmi lequel est choisi ledit co-catalyseur, respectivement du butyloctyl magnésium, du butyl lithium, de l'hydrure de diisobutyl aluminium, et du chlorure de butyl magnésium.

10. Procédé de préparation d'un copolymère d'éthylène et d'un diène conjugué selon une des revendications 1 à 9, **caractérisé en ce qu'**il consiste à utiliser à titre de co-catalyseur un co-catalyseur constitué d'un mélange d'un alkyl aluminium et d'un alkyl lithium qui sont présents en quantités sensiblement stoechiométriques dans ledit mélange.

11. Procédé de préparation d'un copolymère d'éthylène et d'un diène conjugué selon une des revendications 1 à 10, **caractérisé en ce qu'**il consiste à réaliser la réaction de polymérisation au moyen dudit système catalytique en suspension ou en solution, à une température comprise entre 20° C et 90° C.

12. Procédé de préparation d'un copolymère d'éthylène et d'un diène conjugué selon une des revendications 1 à 11, **caractérisé en ce qu'**il consiste à réaliser cette réaction de telle manière que le rapport du nombre de moles dudit co-catalyseur sur le nombre de moles dudit complexe organométallique soit compris entre 2 et 100.

13. Procédé de préparation d'un copolymère d'éthylène et d'un diène conjugué selon une des revendications 1 à 12, **caractérisé en ce qu'**il consiste à réaliser cette réaction de telle manière que la concentration en lanthanide Ln du milieu réactionnel soit inférieure à 0,3 mmol/l.

14. Procédé de préparation d'un copolymère d'éthylène et d'un diène conjugué selon une des revendications 1 à 13, **caractérisé en ce qu'**il consiste à réaliser cette réaction de telle manière que la fraction molaire de diène conjugué dans le milieu réactionnel soit comprise entre 1 % et 80 %.

15. Procédé de préparation d'un copolymère d'éthylène et d'un diène conjugué selon une des revendications 1 à 14, **caractérisé en ce qu'**il consiste à utiliser à titre de comonomère diène conjugué le butadiène ou l'isoprène.

## Claims

1. A method for preparing a copolymer of ethylene and a conjugated diene, comprising reacting a catalytic system in an inert hydrocarbon with ethylene and a conjugated diene monomer solvent, **characterized in that** the catalytic system comprises:

   - an organometallic complex compound, which is represented by the following general formula :

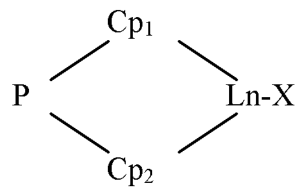

wherein Ln represents a metal of a lanthanide, the atomic number of which is between 57 and 71;
wherein X represents a halogen, selected from chlorine, fluorine, bromine and iodine;
wherein a ligand is bonded to metal Ln, said ligand consisting of $Cp_1$ and $Cp_2$ , which represent substituted or unsubstituted cyclopentadienyl or fluorenyl group, bonded to each other by a bridge P, corresponding to formula $MR_2$, in which M is an element in column IVA of Mendeleev's periodic classification, and R is an alkyl group having 1 to 20 carbon atoms; and
- a co-catalyst selected from the group consisting of a magnesium alkyl, a lithium alkyl, an aluminium alkyl and mixtures thereof.

**2.** The method for preparation of a copolymer of ethylene and a conjugated diene according to Claim 1, **characterized in that** the metal M of bridge P of formula $MR_2$, is silicon.

**3.** The method for preparation of a copolymer of ethylene and a conjugated diene according to Claim 1 or 2, **characterized in that**, in the organometallic complex compound used, the metal of lanthanide Ln is neodymium.

**4.** The method for preparation of a copolymer of ethylene and a conjugated diene according to any of Claims 1 to 3, **characterized in that**, in the organometallic complex compound used, $Cp_1$ and $Cp_2$ are identical, each being a cyclopentadienyl group.

**5.** The method for preparation of a copolymer of ethylene and a conjugated diene according to Claim 4, **characterized in that**, in the organometallic complex compound used, the $Cp_1$ and $Cp_2$ are each a cyclopentadienyl group substituted by an alkyl radical or silyl alkyl.

**6.** The method for preparation of a copolymer of ethylene and a conjugated diene according to Claim 5, **characterized in that**, in the organometallic complex compound used, $Cp_1$ and $Cp_2$ each correspond to formula $(C_5H_4)(SiMe_3)$, in which Me represents a methyl group.

**7.** The method for preparation of a copolymer of ethylene and a conjugated diene according to any of Claims 1 to 3, **characterized in that** $Cp_1$ and $Cp_2$ are identical, each being a fluorenyl group.

**8.** The method for preparation of a copolymer of ethylene and a conjugated diene according to Claims 2 and 7, **characterized in that** $Cp_1$ and $Cp_2$ are each a non-substituted fluorenyl group which corresponds to formula $C_{13}H_8$.

**9.** The method for preparation of a copolymer of ethylene and a conjugated diene according to any of Claims 1 to 8, **characterized in that** the co-catalyst is selected from the group consisting of magnesium butyloctyl, lithium butyl, aluminium diisobutyl hydride, and magnesium butyl chloride and mixtures thereof.

**10.** The method for preparation of a copolymer of ethylene and a conjugated diene according to any of Claims 1 to 9, **characterized in that** the co-catalyst comprises a mixture of an aluminium alkyl and a lithium alkyl, which are present in substantially stoechiometric quantities in the mixture.

**11.** The method for preparation of a copolymer of ethylene and a conjugated diene according to any of Claims 1 to 10 further comprising reacting the catalytic system with the ethylene and conjugated butadiene monomer in suspension or in solution, at a temperature of between 20˚C and 90˚C.

**12.** The method for preparation of a copolymer of ethylene and a conjugated diene according to any of Claims 1 to 11, **characterized in that** the reaction takes place with a molar ratio of the co-catalyst to the organometallic complex compound of between 2 and 100.

**13.** The method for preparation of a copolymer of ethylene and a conjugated diene according to any of Claim 1 to 12, **characterized in that** the reaction takes place with a concentration of metal Ln in the reactive medium of less than 0.3 mmole/l.

**14.** The method for preparation of a copolymer of ethylene and a conjugated diene according to any of Claims 1 to 13, **characterized in that** the reaction takes place with a molar fraction of conjugated diene in the copolymer of between 1% and 80%.

**15.** The method for preparation of a copolymer of ethylene and a conjugated diene according to Claim 13, **characterized in that** the conjugated diene co-monomer is butadiene or isoprene.

**Patentansprüche**

**1.** Verfahren zur Herstellung eines Copolymers von Ethylen und einem konjugierten Dien, bei dem man ein katalytisches System in einem interten Kohlenwasserstoff-Lösungsmittel in Gegenwart des Ethylens und des konjugierten Diens zur Reaktion bringt, **dadurch gekennzeichnet, daß** man ein katalytisches System verwendet, das

- einerseits einen metallorganischen Komplex der folgenden allgemeinen Formel:

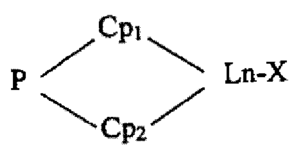

wobei Ln für ein Lanthanidmetall mit einer Ordnungszahl von 57 bis 71 steht,
wobei X für ein Halogen, bei dem es sich um Chlor, Fluor, Brom oder Iod handeln kann, steht,
wobei an das Metall Ln ein Ligandenmolekül gebunden ist, das aus zwei Cyclopentadienyl- oder Fluorenylgruppen $Cp_1$ und $Cp_2$ besteht, die gegebenenfalls substituiert sind und über eine Brücke P der Formel $MR_2$, wobei M für ein Element der Spalte IV A des Periodensystems von Mendelejew steht und R für eine Alkylgruppe mit 1 bis 20 Kohlenstoffatomen steht, miteinander verbunden sind,
und
- andererseits einen Cokatalysator, der unter einer ein Alkylmagnesium, ein Alkyllithium, ein Alkylaluminium umfassenden Gruppe ausgewählt ist oder aus einer Mischung dieser Bestandteile besteht,

umfaßt.

**2.** Verfahren zur Herstellung eines Copolymers von Ethylen und einem konjugierten Dien nach Anspruch 1, **dadurch gekennzeichnet, daß** man als Metall M in der Brücke P der Formel $MR_2$ Silicium verwendet.

**3.** Verfahren zur Herstellung eines Copolymers von Ethylen und einem konjugierten Dien nach einem der Ansprüche 1 bis 2, **dadurch gekennzeichnet, daß** man als Lanthanid Ln in dem metallorganischen Komplex Neodym verwendet.

**4.** Verfahren zur Herstellung eines Copolymers von Ethylen und einem konjugierten Dien nach einem der Ansprüche 1 bis 3, **dadurch gekennzeichnet, daß** man als metallorganischen Komplex einen Komplex verwendet, in dem $Cp_1$ und $Cp_2$ identisch sind und jeweils eine Cyclopentadienylgruppe umfassen.

**5.** Verfahren zur Herstellung eines Copolymers von Ethylen und einem konjugierten Dien nach Anspruch 4, **dadurch gekennzeichnet, daß** man als metallorganischen Komplex einen Komplex verwendet, in dem $Cp_1$ und $Cp_2$ jeweils aus einer Cyclopentadienylgruppe, die durch einen Alkyl- oder Alkylsilylrest substituiert ist, bestehen.

**6.** Verfahren zur Herstellung eines Copolymers von Ethylen und einem konjugierten Dien nach Anspruch 5, **dadurch gekennzeichnet, daß** man als metallorganischen Komplex einen Komplex verwendet, in dem die Cyclopentadienylgruppe durch einen oder Alkylsilylreste substituiert ist, bestehen, wobei $Cp_1$ und $Cp_2$ jeweils der Formel $(C_5H_3)(SiMe_3)$, wobei Me für eine Methylgruppe steht, entsprechen.

**7.** Verfahren zur Herstellung eines Copolymers von Ethylen und einem konjugierten Dien nach einem der Ansprüche 1 bis 3, **dadurch gekennzeichnet, daß** man als metallorganischen Komplex einen Komplex verwendet, in dem $Cp_1$ und $Cp_2$ identisch sind und jeweils eine Fluorenylgruppe umfassen.

**8.** Verfahren zur Herstellung eines Copolymers von Ethylen und einem konjugierten Dien nach Ansprüche 2 und 7, **dadurch gekennzeichnet, daß** man als metallorganischen Komplex einen Komplex verwendet, in dem $Cp_1$ und $Cp_2$ jeweils aus einer unsubstituierten Fluorenylgruppe, die der Formel $C_{13}H_8$ entspricht, bestehen.

**9.** Verfahren zur Herstellung eines Copolymers von Ethylen und einem konjugierten Dien nach einem der Ansprüche 1 bis 8, **dadurch gekennzeichnet, daß** man als Alkylmagnesium, Alkyllithium und Alkylaluminium in der Gruppe, aus der der Cokatalysator ausgewählt wird, respektive Butyloctylmagnesium, Butyllithium, Diisobutylaluminiumhydrid und Butylmagnesiumchlorid verwendet.

**10.** Verfahren zur Herstellung eines Copolymers von Ethylen und einem konjugierten Dien nach einem der Ansprüche 1 bis 9, **dadurch gekennzeichnet, daß** man als Cokatalysator einen Cokatalysator verwendet, der aus einer Mischung eines Alkylaluminiums und eines Alkyllithiums, die in der Mischung in weitgehend stöchiometrischen Mengen vorliegen, besteht.

**11.** Verfahren zur Herstellung eines Copolymers von Ethylen und einem konjugierten Dien nach einem der Ansprüche 1 bis 10, **dadurch gekennzeichnet, daß** man die Polymerisationsreaktion mit Hilfe des katalytischen Systems in Suspension oder in Lösung bei einer Temperatur zwischen 20˚C und 90˚C durchführt.

**12.** Verfahren zur Herstellung eines Copolymers von Ethylen und einem konjugierten Dien nach einem der Ansprüche 1 bis 11, **dadurch gekennzeichnet, daß** man diese Reaktion so durchführt, daß das Verhältnis der Zahl der Mole des Cokatalysators zur Zahl der Mole des metallorganischen Komplexes zwischen 2 und 100 liegt.

**13.** Verfahren zur Herstellung eines Copolymers von Ethylen und einem konjugierten Dien nach einem der Ansprüche 1 bis 12, **dadurch gekennzeichnet, daß** man diese Reaktion so durchführt, daß die Konzentration von Lanthanid Ln im Reaktionsmedium weniger als 0,3 mmol/l beträgt.

**14.** Verfahren zur Herstellung eines Copolymers von Ethylen und einem konjugierten Dien nach einem der Ansprüche 1 bis 13, **dadurch gekennzeichnet, daß** man diese Reaktion so durchführt, daß der Molenbruch des konjugierten Diens im Reaktionsmedium zwischen 1% und 80% liegt.

**15.** Verfahren zur Herstellung eines Copolymers von Ethylen und einem konjugierten Dien nach einem der Ansprüche 1 bis 14, **dadurch gekennzeichnet, daß** man als konjugiertes Diencomonomer Butadien oder Isopren verwendet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4716257 A
- US 5109085 A


### Littérature non-brevet citée dans la description


- **Ballard et al.** *J. Chem. Soc., Chem. Comm.,* 1978, 994-995
- **Cui, Li Qiang et al.** Preliminary investigations on polymerization catalysts composed of lanthanocene and methyl aluminoxane. *Polymer Bulletin (Berlin),* 1998, vol. 40 (6), 729-734